(19) Europäisches Patentamt
European Patent Office
Office européen des brevets

(11) **EP 3 937 122 A1**

(12) **EUROPEAN PATENT APPLICATION**

(43) Date of publication:
**12.01.2022 Bulletin 2022/02**

(51) Int Cl.:
***G06T 5/00*** *(2006.01)*

(21) Application number: **20184658.1**

(22) Date of filing: **08.07.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Koninklijke Philips N.V.
5656 AG Eindhoven (NL)**

(72) Inventors:
• **SCHNELLBÄCHER, Nikolas David Schnellbächer**
**5656 AE Eindhoven (NL)**
• **WUELKER, Christian**
**5656 AE Eindhoven (NL)**
• **GRASS, Michael**
**5656 AE Eindhoven (NL)**

(74) Representative: **Philips Intellectual Property &
Standards
High Tech Campus 52
5656 AG Eindhoven (NL)**

(54) **3D-CNN PROCESSING FOR CT IMAGE NOISE REMOVAL**

(57) System and related methods for de-noising 3D imagery. The system (IPS) comprises a pre-trained discriminative neural network (NN). The network includes a sequence of 3D convolutional operators (CV) for processing a received 3D image volume into a 3D output image. The 3D output image has a lower noise level than the 3D input image.

FIG. 1

**Description**

FIELD OF THE INVENTION

A system of denoising 3D imagery, a training system for training a neural network model for use in 3D image denoising, a computer-implemented method for de-noising 3D imagery, a computer-implemented training method for training a neural network model for use in 3D image denoising, a computer program element, and a computer readable medium.

BACKGROUND OF THE INVENTION

All medical imaging modalities are prone to noise due to the statistical nature of signal formation and data acquisition. These noise sources impair the diagnostic value of medical image data. For this reason, image denoising is not only an inherent part of many general-purpose image processing tools, but is also crucial in the medical domain in general to improve the image quality and thus the diagnostic value of acquired medical image data.

Computed tomography (CT) can produce a three-dimensional (3D) image volume of the anatomy of interest, or parts thereof.

Conventional image-denoising approaches exist, but these are limited to 2D approaches where such 3D images are sequentially processed per slice in axial direction.

However, both the partitioning of the full 3D image into 2D axial slices, as well as the use of 2D convolutions, are typically down to a matter of convenience rather than to exploiting a spatial invariance in the axial direction. In fact, such axial distinction is usually not warranted by the input image.

While noise removal performance in a 2D view (which may be identical to the processing view) can in some situations deliver satisfactory results, algorithms of this type typically produce streak artifacts and rough edges in coronal and sagittal views orthogonal to the 2D axial slice view.

Furthermore, such axial inconsistencies may be observed when scrolling through the axial 2D slices in a denoised image volume along the axial direction, which is the preferred working manner of radiologists.

SUMMARY OF THE INVENTION

There may therefore be a need for improved image denoising.

The object of the present invention is solved by the subject matter of the independent claims where further embodiments are incorporated in the dependent claims. It should be noted that the following described aspect of the invention equally applies to the training system for training a neural network model for use in 3D image denoising, the computer-implemented method for denoising 3D imagery, the computer-implemented training method for training a neural network model for sue in 3D image denoising, the computer program element, and the computer readable medium.

According to a first aspect of the invention there is provided a system for de-noising 3D imagery, comprising a pre-trained discriminative neural network including a sequence of 3D convolutional operators for processing a received 3D image volume into a 3D output image having a lower noise level than the 3D input image.

The proposed neural network model includes fully 3D mathematical operators such as the said 3D convolutional operator, but may optionally include other 3D operators, such as 3D batch normalization and others. The proposed network may be used for direct and residual learning approaches and may be implemented in various neural network architectures such as feed-forward or encoder-decoder types of networks or others.

In particular the use of 3D convolutional operators with 3D kernels allows overcoming the above mentioned image quality degradations by appropriately taking spatial correlations in all three spatial dimensions into account. This is because of the 3D convolutional operators and in particular their 3D kernels operate across all three spatial dimensions as opposed to 2D convolutions whose operation is confined to a single plane only. Specifically, it is envisaged herein that the proposed network uses only 3D convolutional operators, and no convolutional operators of lower dimension such as 2D. 3D convolutional operators better account for spatial consistencies of volume data and help preserve structural details of spatial volume data better than 2D-based approaches.

In embodiments, the 3D input image is of an object of interest represented in the 3D input image as a structure having a first size, wherein a kernel size of at least one of the 3D convolutional operators and/or a depth of the neural network is configured so that the receptive field of the neural network is of a second size, smaller than the first size.

In general, the receptive field is a 3D quantity and measures the dependency on how a given image element (voxel, pixel or set) in the output image depends on image elements of the input image. The dependency may be represented as a sub-set of the input image and the size quantifies the spatial extent of this sub-set, measurable in diameter, or volume, or any other suitable measure.

By setting the input receptive field of the convolutional operations sufficiently small compared to the natural extent of image anatomy, the image processing becomes anatomy agnostic and hence allows better noise reduction. Anatomic agnosticism in the proposed with specifically configured receptive field size prevents the detection of large-scale anatomy features by the network during training and inference, and focuses the learning and inference capacity of the network on noise removal unaffected by anatomy. Otherwise, without the said anatomy agnostic property, the network may behave unpredictably in situations where pathologic or atypical anatomy is present.

Whilst the size of the receptive field is preferably configured smaller than the image structure of interest, the receptive field is preferably chosen not smaller than necessary as too small a receptive field size may attract higher computational overhead. A useful balance between receptive field size (and hence improved denoising performance) and acceptable CPU time may be called for when choosing the right receptive field size. The choice of the receptive field size may be application/task dependent.

In embodiments, the system further includes a user interface for selecting a different neural network having a different second size. In this embodiment, there may be a set of pre-trained neural networks with different receptive field sizes, and with the user interface acts as a switch to the user can swap in and out neural networks with the right receptive field size according to the imaging task hand.

In embodiments, the system includes a sampler configured to sample from an original 3D image one or more 3D sub-sets, wherein the said 3D input image is such as sub-set.

In embodiments, the system may include a sampler to (randomly) sub-sample the initial input 3D volumes into smaller 3D patches (sub-sets) which may be overlapping, directly connected or interleaved. The inference or learning may then be based on said 3D patches instead of on the whole initial 3D input volume. The subsampling may further the anatomy agnostic property of the neural network to yet further boost denoising performance.

The sampler is preferably present in the learning/training phase and/or the deployment phase. In embodiments it may be sufficient to include the sampler in the training phase only whilst not using the same during deployment.

In embodiments, the system includes a plurality of such discriminative neural networks in a serial arrangement for serial processing of the input image.

In embodiments, the system includes a plurality of such discriminative neural networks in a parallel arrangement for processing copies of the input image to output plural such output images, further comprising an aggregation layer to aggregate the plural output images into a single output image.

In embodiments, the 3D input images represents i) three spatial dimensions or ii two spatial dimensions and one temporal dimension.

In embodiments, the receptive field of pre-trained discriminative neural network is set through adjusted filter kernel sizes of the convolutional operators for any combination of spatial and/or temporal dimensions of the 3D input image.

In embodiments, the system is arranged at least in parts as a web-hosted service.

In another aspect there is provided a training system for training a neural network model as per any one of the preceding claims.

In another aspect there is provided a method for de-noising 3D imagery, comprising receiving a 3D input image, with a pre-trained convolutional discriminative neural network including a sequence of 3D convolutional operators, processing the received 3D image volume into a 3D output image, and outputting the 3D output image having a lower noise level than the 3D input image.

In another aspect there is provided a training method for training a neural network model as per any one of the above described embodiments.

In embodiments, the said training is based on training data, the training data including training input data, the training input data comprising at least one 3D image volume, the method further comprising sub-sampling the 3D image volume to obtain at least one sub-volume and wherein a neural network model is trained based on the said at least one sub-volume.

In another aspect there is provided a computer program element, which, when being executed by at least one processing unit, is adapted to cause the processing unit to perform the method as per any one of the above mentioned embodiments.

In another aspect still, there is provided a computer readable medium having stored thereon the program element.

The proposed system and method can be used with all CT applications, including spectral CT. The proposed CNN-based noise removal may be implemented as a post-processing stage to improve CT image quality. This is in particular applicable for low-dose CT exams to achieve high-quality CT images at a low radiation dose. Applications to other 3D imaging modalities such as MRI or PE/SPECT is also contemplated herein.

Definitions

*"User"* relates to a person, such as medical personnel or other, operating the imaging apparatus or overseeing the imaging procedure. In other words, the user is in general not the patient.

*"Object"* is used herein in the general sense to include animate "objects" such as a human or animal patient, or anatomic parts thereof but also includes inanimate objects such as an item of baggage in security checks or a product in non-destructive testing. However, the proposed system will be discussed herein with main reference to the medical field, so we will be referring to the "object" as "the patient" and the location of interest ROI, being a particular anatomy or group of anatomies of the patient.

*"3D", "2D"* is shorthand for three-dimension(al) and two-dimension(al) data.

In general, the *"machine learning component"* is a computerized arrangement that implements a machine learning ("ML") algorithm that is configured to perform a task. In an ML algorithm, task performance improves measurably after having provided the arrangement with more training data. The task's performance may be measured by objective tests when feeding the system with test data. The task's performance may be defined in terms of a certain error rate to be achieved for the given test data. See for example, T. M. Mitchell, "Machine Learning", page 2, section 1.1, McGraw-Hill, 1997.

## BRIEF DESCRIPTION OF THE DRAWINGS

Exemplary embodiments of the invention will now be described with reference to the following drawings, which, unless stated otherwise, are not to scale, wherein:

Figure 1 shows a schematic block diagram of an imaging arrangement;
Figures 2A-C shows schematic block diagrams of neural network models according to different embodiments;
Figure 3A, B show a schematic block diagram of a convolutional operation;
Figure 4 shows a training system for training a neural network model;
Figure 5 shows a flow chart of a method of processing 3D input imagery; and
Figure 6 shows a flow chart of a method for training a neural network model.

## DETAILED DESCRIPTION OF EMBODIMENTS

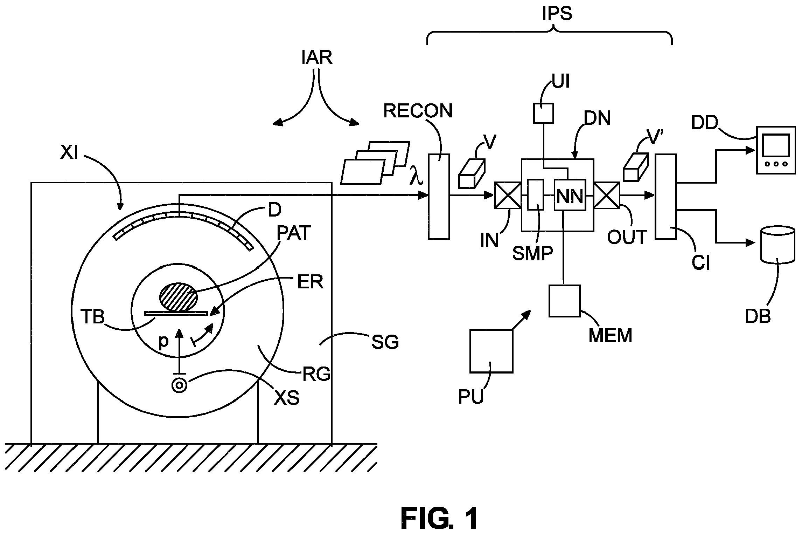

With reference to Figure 1 there is shown an imaging arrangement IA envisaged herein in embodiments.

The imaging arrangement IA includes an X-ray imaging apparatus XI that is configured to acquire projection raw data of an object PAT such as a human patient or animal.

The projection raw data acquired by the imaging apparatus XI may be processed by a computerized image processing system IPS to produce sectional imagery of object PAT. In more detail, the image processing system includes a reconstructor RECON and an image de-noiser DN to remove, or at least reduce, image noise in the sectional imagery reconstructed by the reconstructor RECON.

The sectional imagery may be passed through a communication interface CI to be stored in memory DB, such as in a database system, and/or may be visualized by a visualizer (not shown) on a display device DD, or may be otherwise processed.

The imaging apparatus XI ("imager") envisaged herein is in particular of the X-ray based tomographic type for 3D imaging. In this type of imaging, also referred to as rotational imaging, the projection raw data $\lambda$ are acquired of a ROI of patient PAT or of the patient as a whole, by exposing the patient to an X-ray beam. The projection raw data may then be reconstructed by a reconstructor RECON into axial cross-sections - the said sectional images or "slices". The axial cross-sectional images may reveal information about internal structures of the ROI to allow examination and diagnosis by clinicians in line with clinical goals or objectives to be achieved. Particularly envisaged herein are X-ray based imagers, such as computed tomography (CT) scanners, or C-arm/U-arm imagers, mobile, or fixedly mounted in an operating theatre, etc. The imaging apparatus XI may be configured for tomographic dark-field ("DF") CT imaging (DF-CT) and/or tomographic phase-contrast ("PC")-CT imaging (PCI-CT) in some embodiments where a grating structure such as an interferometer is used. Radiographic imagers for acquiring times series of 2D images are not excluded herein in embodiments.

The imager XI includes an X-ray source XS and an X-ray sensitive detector D. The detector includes a plurality of X-ray sensitive (detector) pixels. The imager XI may be configured for energy integrating imaging or for spectral imaging (also referred to as energy discriminating imaging). Accordingly, the detector D may be of the energy integrating-type, or of the energy discriminating type, such as a photon-counting detector.

During image acquisition, patient PAT resides in an examination region ER between the source XS and detector D. In embodiments, the source X-ray moves in an imaging orbit or scan path in a rotation plane around an imaging axis. Helical scan paths are also envisaged. The rotation may be achieved by having imager XI include a stationary gantry FG and a rotating gantry MG. The rotating gantry MG is rotatably supported by the stationary gantry FG. The rotating gantry MG rotates around the examination region ER and at least a portion of subject PAT therein, and about an imaging axis. The radiation source XS, such as an X-ray tube, is supported by and rotates with the rotating gantry MG around the examination region ER. The imaging axis passes through the ROI. Preferably, the patient's longitudinal axis is aligned with the imaging axis, but other arrangements and geometries are also envisaged. For example, in some embodiments, the patient is standing, with the X-ray source rotating around the patient's (now upright) longitudinal axis.

During the rotation, the source XS emanates the X-ray beam, and irradiates the ROI. During the rotation, the projection raw data are acquired at the detector D from different projection directions $p$. The X-ray beam passes along the different directions through the patient PAT, particularly through the ROI. The X-ray beam interacts with matter in the region of interest. The interaction causes the beam to be modified. Modified radiation emerges at the far end of the patient and then impinges on the X-ray sensitive detector D. Circuitry in the detector converts the impinging modified radiation into electrical signals. The electrical signals may then be amplified or otherwise conditioned and are then digitized to obtain (digital) projection raw data $\lambda$. The projection raw data $\lambda$ may then be reconstructed into the axial sectional -imagery by reconstructor RECON.

The reconstructor RECON is a computer implemented module that runs a reconstruction algorithm, such as FBP (filtered back-projection), Fourier-domain based reconstruction algorithms, algebraic (ART) reconstruction algorithm, or iterative reconstruction algorithms. The reconstruction algorithm is adapted to the imaging geometry used. In embodiments, a cone-beam reconstruction algorithm is used. In embodiments, the reconstruction algorithm is adapted for helical scan paths.

The reconstructor RECON module may be arranged in hardware or software or both. The reconstructor RECON transforms the projection raw data $\lambda$ acquired in the projection domain of the detector D into the axial sectional imagery in image domain. Image domain includes the portion of space in the examination region where the patient resides during imaging. In contrast, the projection domain is located in an X-ray radiation sensitive surface or layer of the X-ray detector D. In the image domain, the reconstructed imagery may be defined in cross sectional planes parallel to the rotation plane(s) of the orbit and perpendicular to the imaging axis. Different axial images in different cross sectional planes can be acquired, that together form a 3D image volume V, i.e., a 3D image representation of the ROI. The 3D volume V may be reconstructed from projection imagery acquired whilst advancing the support table TB on which patient PAT resides during imaging, such as in a helical scan path. Alternatively, or in addition, it is the stationary gantry FG that is translated. The relative translational motion of patient PAT versus source XS along the imaging axis, and the rotation of source XS around said imaging axis give rise to the helical scan path at a certain pitch. The pitch may be fixed or is user adjustable. In non-helical scans, the scan path in general subtends an arc of at least, or substantially equal to, 180° (plus fan angle if any).

The reconstructed imagery V is often marred by image noise. Image noise decreases image quality and in extreme cases may render the reconstructed imagery *V* un-diagnostic. Noise in the reconstructed imagery may "mask" valuable tissue contrast which the diagnostician needs to ascertain in order to arrive at a correct diagnostic conclusion for example. The image signals represented by the imagery *V* may be thought of as being made up from two contributions: there is the actual image signal that one wishes to measure which may correspond to a tissue response, and there is a second contribution from noise. This may be formally written as

$$I_i = s_i + \mathcal{N}_i,$$

with $I_i$ indicating an image signal at voxel $i$, $s_i$ the actual image signal one wishes to measure, and $\mathcal{N}_i$ the noise contribution.

The sources of image noise are largely to be found in the image acquisition process. That is the projection imagery recorded at the detector in some cases inevitably includes noise contribution. Noise is a function of the x-ray dosage used in the image acquisition. The dose is largely a function of the x-ray amperage or voltage applied in the x-ray source in order to generate the imaging x-ray beam. In general, the higher the dose, that is the number of impinging x-ray photons per unit time, the lower the noise is. Scatter incurred by material thickness is also a factor. However, the higher the dosage the higher the health risk for the patient. There is therefore a tradeoff between, on the one hand, having good image quality and low x-ray exposure to the patient on the other. Because of safety guidelines, patient dosage is usually prescribed to be below a certain threshold and this inevitably attracts certain level of noise. Another source of noise is to be found in the electric circuitry of the detector. The circuitry operates to transform the impinging x-ray photons into electrical signals that are then processed into the imagery V. The interaction between the x-ray photons and the detector circuitry is inherently statistical and can be described by the detector quantum efficiency (DQE). Whilst noise is mainly incurred in the image acquisition phase, the image reconstruction algorithm used to reconstruct the imagery from the projection imagery may also contribute to noise.

In order to reduce, or to entirely eliminate, noise contribution and therefore restore the true image values $I_i$ in

the imagery V, the image processing system IPS includes the de-noiser component DN. In the preferred embodiment envisaged herein the de-noiser DN includes a pre-trained neural network model NN. Broadly, the reconstructed 3D volume V is received at an input port IN of the de-noiser DN. The imagery is then applied to the neural network M and is then propagated therethrough, to emerge at output port OUT as the de-noised version *V'* of the input imagery V. It is particular that overall or local noise level in the de-noised volume *V'* that is lower than the overall or local noise level in the input image V. The noise level measurable by suitable noise metrics such as statistical standard deviation.

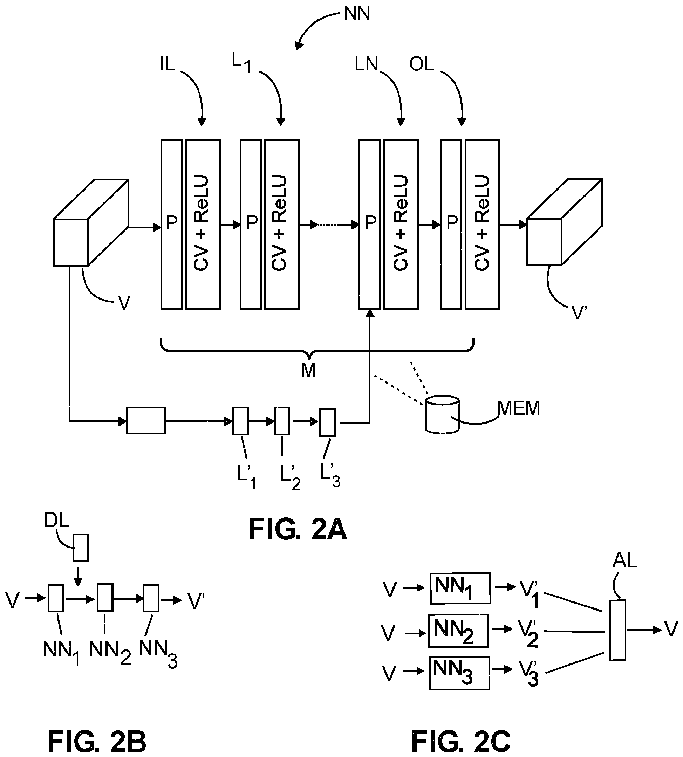

With reference to Figure 2 this shows a schematic block diagram of a neural network M of the feed-forward type. The network M is preferably fully convolutional in that it does not include a fully connected layer.

Functionally, operation of the neural network M as used herein, is one of a regression, wherein the a-priori unknown latent relationship between noisy imagery and dennoised imagery is learned. A known image (the input volume V) is regressed into its dennoised version. Imagery is hence mapped end-to-end. The neural network NN is preferably a discriminative supervised machine learning model, which is implemented to solve the herein envisaged regressional image-to-image task e.g. by using a preferably a fully convolutional neural network. As opposed to generative models, which relate to joint probabilities, the neural network model NN envisaged herein is of the discriminative type. Discriminative type models are configured to provide an estimated sampling from a conditional probability distribution $P^{X=V}(Y=V')=$ Prob($Y=V'|X=V$), where $Y$ is a random variable for the estimated denoised image *V'*, and $X=V$ a realization of random variable X as per the noisy input image V. The conditional probability Prob($Y=V'|X=V$), that is, the probability for the denoised image $Y=V'$, given the known noisy image $X=V$, is as such not known. But the discriminative neural network model NN provides estimates for sampling from this unknown conditional probability distribution $P^X(Y)$. Discriminative models NN as preferred herein usually require lower computational overhead than generative type models, and are in general more robust and stable as compared to generative type models.

The model NN may be trained by a computerized training system TS. In training, the training system TS adapts an initial set of (model) parameters θ of the model NN. The training data may be generated by simulation or may be procured from existing historic imagery as may be found in medical image database such as in PACS (picture archiving and communication system) or similar. Two processing phases may thus be defined in relation to the machine learning model NN: a training phase and a deployment (or inference) phase.

In training phase, prior to deployment phase, the model is trained by adapting its parameters based on the training data. Once trained, the model may be used in deployment phase to denoise any reconstructed volume V (that is not from the training data) into the denoised volume version *V'*, for any given patient PAT during clinical use. The training may be a one off operation, or may repeated with new training data. The above mentioned components will now be described in more detail.

The machine learning model NN may be stored in one (or more) computer memories MEM. The pre-trained CNN model NN may be deployed as a machine learning component that may be run on a computing device PU, such as a desktop computer, a workstation, a laptop, etc. Preferably, to achieve good throughput, the computing device PU includes one or more processors (CPU) that support parallel computing, such as those of multi-core design. In one embodiment, GPU(s) (graphical processing units) are used.

Referring now in more detail to Figure 2A, this shows a convolutional neural network M in a feed-forward architecture. The network M comprises a plurality of computational nodes arranged in layers in a cascaded fashion, with data flow proceeding from left to right and thus from layer to layer. Recurrent networks are not excluded herein.

In deployment, 3D volume V is applied to input layer IL. The 3D volume is fed into model NN at input layer IL, then propagates through a sequence of hidden layers L1-L3 (only three are shown, but there may be one or two, or more than three), to then emerge at an output layer OL as the denoised version V' having the same size as input V. The network M may be said to have a deep architecture because it has more than one hidden layers. In a feed-forward network, the "depth" is the number of hidden layers between input layer IL and output layer OL, whilst in recurrent networks the depth is the number of hidden layers, times the number of passes.

The layers of the network, and indeed the input and output imagery, and the input and output between hidden layers (referred to herein as feature maps), can be represented as two or higher dimensional matrices ("tensors") for computational and memory allocation efficiency. The input volume V may be represented as a 3D matrix with dimensions x, y, z. The input imagery V thus forms a 3D-dimensional matrix, with height, width and depth.

Preferably, the hidden layers include a sequence of convolutional layers, represented herein as layers $L_1$-$L_{N-k,k>1}$. The number of convolutional layers is at least one, such as 3 or 5 or any other number. The number may run into double-digit figures.

In embodiments, downstream of the sequence of convolutional layers there may be one or more fully connected layers but this is not necessarily the case in all embodiments and indeed preferably no fully connected layer is used in the architecture envisaged herein in embodiments.

Each hidden $L_m$ layer and the input layer IL implements one or more convolutional operators CV. Each layer $L_m$ may implement the same number of convolution operators CV or the number may differ for some or all layers.

A convolutional operator CV implements a convolutional operation to be performed on its respective input. The convolutional operator may be conceptualized as a convolutional kernel. It may be implemented as a matrix including entries that form filter elements referred to herein as weights θ. It is in particular these weights that are adjusted in the learning phase. The first layer IL processes, by way of its one or more convolutional operators, the input volume V. Feature maps FM are the outputs of convolutional layers, one feature map for each convolutional operator in a layer. The feature map of an earlier layer is then input into the next layer to produce feature maps $FM^i$, $FM^{i+1}$ of a higher generation, and so forth until the last layer OL combines all feature maps into the output volume V'. The last combiner layer may also be realized as convolution that provides the denoised image V's estimate as an output single feature map as having the same size as the input volume V.

The convolutional operators in the input layer IL and some or all hidden layers, are preferably 3D. That is, there is convolution across the spatial dimensions, to better account for spatial correlations in all 3 spatial dimensions.

A convolutional operator CV in a convolutional layer is distinguished from a fully connected layer in that an entry in the output feature map of a convolutional layer is not a combination of all nodes received as input of that layer. In other words, the convolutional kernel is only applied to sub-sets of the input volume V, or to the feature map as received from an earlier convolutional layer. The sub-sets are different for each entry in the output feature map. The operation of the convolution operator can thus be conceptualized as a "sliding" over the input, akin to a discrete filter kernel in a classical convolution operation known from classical signal processing. Hence the naming "convolutional layer". In a fully connected layer an output node is general obtained by processing all nodes of the input layer.

The stride of the convolutional operators can be chosen as one or greater than one. The stride defines how the sub-sets are chosen. A stride greater than one reduces the dimension of the feature map relative to the dimension of the input in that layer. A stride of one is preferred herein. In order to maintain the dimensioning of the feature maps to correspond to the dimension of the input imagery, a zero padding layer P is applied. This allows convolving even feature map entries situated at the edge of the processed feature map.

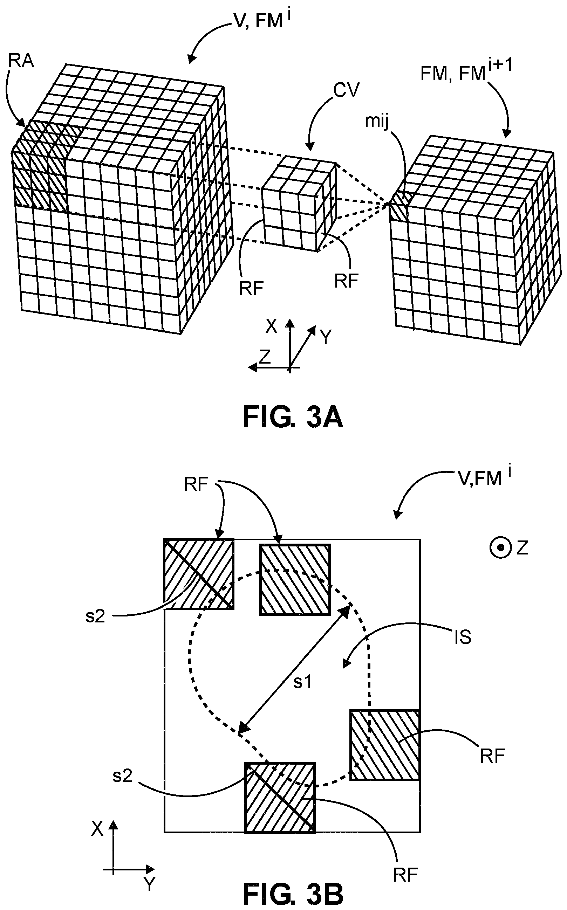

Reference is now made to Figures 3A, B which show more detail of the 3D convolutional operation as envisaged herein in embodiments. As mentioned earlier, for efficiency reasons the, input volume V, the output volume V', the feature maps and the convolutional operators themselves may each be represented as matrices. In particular, 3D dimensional matrices are envisaged herein. In particular, a kernel of the convolutional operator CV has a width X, a height Y and a depth Z as indicated by the co-ordinate system in Figure 3A. In particular, the kernel of the convolutional operator is preferably envisaged herein as a 3D kernel, so has in particular a depth Z greater than 1, for instance, two, three or more.

Figure 3A represents the convolutional operation of convolutional operator CV in the first layer where the image volume block V is processed to produce a first generation feature map $FM = FM^1$. Similar convolutional processing is applied to feature maps further downstream in the cascaded layers where feature map $FM^i$ is convolved into feature map $FM^{i+1}$ of the next generation and so on. Each convolutional operator CV may be defined by its kernel (size) which is represented in Figure 3A as a small cube of example size 3x3x3. For each neural node $m_{ij}$ of in the output feature map, the convolutional operator CV acts on the above mentioned sub-set, or region of action RA, in the input block V. In other words, in the input layer IL of the neural network NN, a convolutional operator CV maps a plurality of voxels that form the region of action RA, a sub-set of block V, into a single node $m_{ij}$ of the feature map FM. Different feature map nodes are processed from different sub-sets RA to build up the whole feature map. The function applied by the kernel to build up each feature map node of a k-th generation feature map may be written as $m_{ij}^k = f(W * z)$, where $f$ can be any suitable function, such as a linear function, z is a voxel of the input image or node in an earlier feature map $FM^{k-1}$ in the respective region of action RA, "*" the convolutional operator and $W$ a set of weights, used in the convolution.

The number of voxels of the input volume V so processed per output node $m_{ij}$ describes the size of receptive field RF of the neural network for the unit $m_{ij}$ at this layer and is determined by the kernel size, stride and paddings of all convolution operators CV preceding this layer, where $m_{ij}$ is located. More particularly, the receptive field of the entire convolutional neural network (CNN) is the size of the region of action RA of the input volume V, which "seen" i.e. processed to determine a given unit $m_{ij}$ of the output volume V'. For example, as shown schematically in Figure 3A, the kernel of the convolutional operator has size 3x3x3 numbers which results in a receptive field RF of size 3x3x3 for this single convolution operation.

The projection view along direction Z is shown in more detail in Figure 3B. Preferably, as envisaged herein, the receptive field size s2 is smaller than the size s1 of an image structure IS of interest encoded in the input volume V to be de-noised. The sizes s1 and s2 may be measured in number of pixels, voxels or nodes. For instance, the size s1 of the image structure of interest IS can be indicated as shown as the largest diameter of the image structure or the area covered. Any other size measurement or metric is also envisaged herein. The image structure may represent a region of interest such as an organ, anatomy, or parts thereof or a group of such organs or anatomies. the size s1 is not confined in a plane along Z or any other direction. The size is in general a 3D quantity to capture the size of the image structure in all three dimensions. Thus, the sizes s1 and s2 are in general 3D quantities.

Instead of choosing the receptive field RF to match the size of the image structure IS one wishes to image, counterintuitively Applicant has discovered that making the receptive size s2 smaller than the actual size s1 of the image structure of interest allows boosting de-noising performance. This is because of the small receptive field size s2 relative to the image structure size s1, the neural network NN can then be trained without "seeing the full picture" of the image structure of interest. It hence focuses on the noise contribution that is learned, and not the particular anatomies as presented in the training data which may vary considerably from patient to patient and which shall be preserved for any image denoising method. In other words, the network NN is learned to be agnostic about anatomy, which is a very desirable property for image denoising. The learning is "forced" to focus on the different patterns of noise contributions rather than particular anatomies. An agnostic index may be defined as $i_{ag} = s1/s2$ and this is preferably > 1. For example, for $i_{ag} \geq 2$ good denosing performance has been observed.

Because of the cascaded nature of the CNN, the receptive field grows with the depth of the layer at which it operates as $m_{ij}^k$ for k>1 is a function of an ever larger number of voxels. It can hence be said that the receptive field is an property of interest of the network NN as a whole, although one may define a local receptive field at each intermediate unit of the network at each (hidden) layer as described above at Figure 3B. Therefore, for best results, the depth of the network and the all convolutional operators CV that make up the CNN are tuned so that the overall receptive field of the entire network remains below the threshold set by the image structure size s1 in the image volume *V*.

It will be appreciated that the depth direction Z in general corresponds to the imaging axis, however, this may not necessarily be so for instance for re-formatted volumes V as also envisage herein.

Rather than feeding the entire input volume V into the first layer IL as shown in Figure 2, it is envisaged in embodiments to apply the sampler SMP first that divides the input volume V into smaller sub-volumes or 3D "patches", which are then processed as described above. If the sampler SMP is used, the receptive field is preferably adjusted accordingly so as to be smaller than the patch size and also smaller than the structure of interest IS. The manner in which the sampler sub-divides the original volume V into sub-volumes is according to a number of different embodiments. For instance, the sampling may be interleaved, overlapping or directly connected. Interleaved sampling pertains to a spatial configuration where any two adjacent patches are separated by a fixed gap, whereas in overlapping there is an intersection and data redundancy is incurred. In directly connected embodiments as is envisaged herein, this is a special case of an interleaved configuration with gap size zero, so any two adjacent patches are contiguous. The sampling by sampler SMP may be random or deterministic. The sampling proceeds in pre-defined or random sampling path to cover the whole volume V. Each sub-volume is processed into a corresponding denoised sub-volume. The denoised sub-volumina are then recomposed by a recomposer component (not shown) to leave the complete denoised volume *V'*. The sampling by sampler SMP furthers the anatomy agnostic learning paradigm, and hence facilitates better performance of the denoiser. That sampler may be used when training the network. The sampler SMP may or may not then be used during deployment.

As the user may be interested in imaging image structures of different sizes it is envisaged herein to not only train a single neural network NN, but to train a plurality of such neural networks $NN_{s2}$, each with different receptive fields of sizes s2. The image processing system IPS may include a user interface UI as shown in Figure 1 that allows the user to specify the desired image structure size. The user interface than translates the size into one s2 for the receptive field, and the correct associated neural network model NN, one with receptive fields size s2<s1, is then activated to process the current input imagery *V*.

Some or each convolutional filter in some or each layer $L_m$ may be combined with a non-linearity inducing layer, such as a RELU (rectified linear unit) operator as shown in Figure 2. The RELU layer applies a non-linear function, *f(z)* = *max(z,* 0) to the output feature maps received from the respective convolutional filter kernels CV. The RELU layers adds a non-linear component to the network M. Other nonlinearity operators may be used instead, such as the sigmoid function or the *tanh*-function, or others still.

Other layers than the ones shown can be combined with the convolutional layers in any combination, including deconvolutional layers, max-pooling layers, drop-out layers and others, or such other layers may be used instead.

Whilst the convolutional neural network architecture NN envisaged herein may include a single strand of layers to process the input imagery, this is not necessarily the case in all embodiments and multi-strand processing is also envisaged. In multi-strand processing there are one or more additional strands of separate layers that process the input imagery. In embodiments the output of those additional strands are then merged and processed together to compute the output imagery V'.

In particular, in embodiments the sub-sampling by sampler SMP is used to obtain from the full image volume V one or more sub-volumes. Each sub-volume is then processed in a separate strand of convolutional operators, separate from the "main" strand of convolutional operators that processes the whole input volume V. One such separate strand is shown at the bottom of Figure 2A as sequence of three cascaded layers $L'_j, j=1\text{-}3,$ but three such layers is exemplary, as there may be only two, or more than 3.

This multi-strand processing may be envisaged in particular for multi-resolution processing which operates at different resolution levels. In some types of multi-resolution processing, the main strand of layers includes not only convolution layers but also de-convolutional layers. Specifically, one or more runs of convolutional layers alternate with one or more runs of deconvolutional layers. Deconvolutional layers include deconvolutional operators that act as quasi-inverse operators to the convolutional operators. Configuring convolutional operators with stride greater than one allow lowering the resolution of the feature maps where deconvolutional operators can restore resolution. Examples of neural networks models with multi-resolution capability include *U-net* architectures as reported by OlafRonneberger et al in "U-Net: Convolutional Networks for Biomedical Image Segmentation", published in Navab N., et al. (eds) "Medical Image Computing and Computer-Assisted Intervention - MICCAI 2015", Lecture Notes in Computer Science, vol 9351, pp 234. In *U-net* type NN architectures, the main processing strand includes sub-strands that process at different respective resolution levels.

The 3D patches produced by the sampler SMP are processed in separate strands and the feature maps so obtained are then fed into the multi-resolution processing main strand that processes the whole image V as described above. Specifically, the feature maps obtained by processing the 3D patches in separate strands are fed into the main stand at some or each of the resolution levels to be co-processed with the respective feature maps. The co-processing may be done by concatenating the respective feature maps at some or each resolution level.

The above mentioned sampler SMP and the described multi-resolution approaches can also be combined such that sub-sampled volumes of arbitrary shape are fed into neural network processing stages at one, more than one, or all of the various levels of different image resolutions. The sub-sampled volumes of arbitrary shape may be joined together by appropriately chosen up/down-sampling and convolution and deconvolution, and/or concatenation operations.

In embodiments, a plurality of the above described neural network architecture NN, designated herein as $NN_1$-$NN_3$, may be combined into multi-network architectures as schematically shown in inset Figures 2B,C. Some or all of the component networks NNj may be trained based on the same or on different training sets. Serial (Figure 2B) or parallel (Figure 2C) such multi-architectures may be envisaged herein.

In the sequential or serial arrangement Figure 2A, the plurality pre-trained convolutional neural networks $NN_{1-3}$ (there may two or more than three of such networks) are applied iteratively, in sequential order, to so implement an unrolled iterative denoiser. This allows comparing intermediate results from the respective outputs $OL_j$, with reference measurements to so provide a data consistency layer DL to enforce consistency of the estimated imagery with the reference measurements. A feed-back signal on data consistency may be fed by the data consistency layer DL into the input layer IL of the next network NNj+i in the next iteration, and so on. The reference measurements may comprise projection data $\lambda$ from which the input volume V has been reconstructed. The data consistency layer may implement a forward projector to forward project the estimated volume $V_j'$ for a given stage j in the serial arrangement to obtain synthesized projections. The synthesized projections can then be compared with the original projections $\lambda$ to establish a deviation if any. The deviation is quantified (eg, by obtaining difference projections) and the quantified deviation is then provided as feedback signal to the next processing stage. The data consistency layer may operate in between each successive stages, or once in between a single pair of stages (predetermined or by random selection) or in between every k-th pair of stage.

Alternatively, the plurality of pre-trained component networks $NN_1$-$NN_3$ are arranged in parallel (Figure 2C) and are applied to the same input image V. The multiple output images $V_j'$ may then be aggregated, by an aggregation layer AL, into a final output image V'. Different configurations of the aggregation layer AL are envisaged herein in embodiments. For example, the output imagery $V_j'$ may be aggregated by ensemble averaging, or by consensus voting on the results $V_j'$ estimated by the respective individual network $NN_j$. In this way, statistical confidence and uncertainty estimates on the algorithmic performance may be obtained. Other manners of aggregation are also envisaged.

In any of the above described architectures for CNN-type model NN, the totality of the weights W for all convolutional/deconvolutional filter kernels of the CNN model NN define a configuration of the machine learning model. The weights may differ for each layer and each layer may include plural convolutional operators some or each having a different set of kernels W. It is these weights W*j* that are learned in a training phase, where index j runs over layers and convolutional operators therein. Once the training phase has concluded, the fully learned weights, together with the architecture in which the nodes are arranged, can be stored in memory MEM and can be used for deployment.

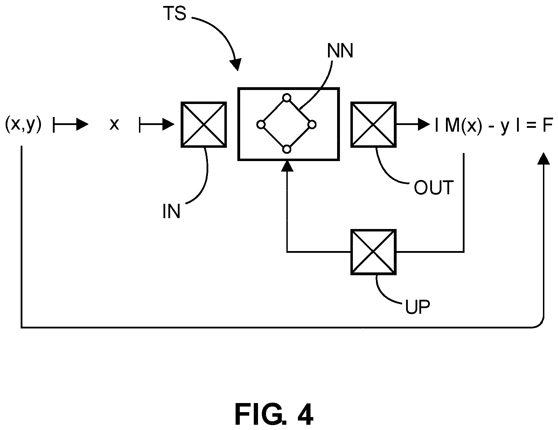

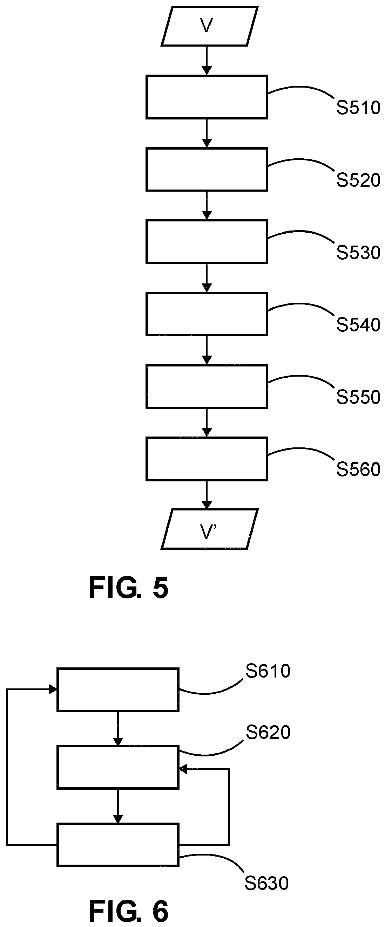

The training aspects of the machine learning model NN will be explained further below at Figures 4 and 6. The training may be a one-off operation or the previously trained model may be trained further when new training data becomes available.

Reference is now made to Figure 4 which shows a training system TS for training the parameters, i.e. the weights of machine learning model such as in a convolutional neural network as discussed in Figure 3 or other. The training data comprises pairs $k$ of data $(x_k, y_k)$. The training data comprises for each pair $k$ (the index $k$ is not related to the index used above to designate generation of feature maps), training input data $x_k$ and an associated target $y_k$. The training data is thus organized in pairs $k$ in particular for supervised learning schemes as mainly envisaged herein. However, it should be noted that non-supervised learning schemes are not excluded herein.

The training input data $x_k$ may be obtained from historical image data acquired in the lab or previously in the clinic and held in image repositories. The targets $y_k$ or "ground truth" may represent examples of low noise images, whereas the $x_k$ are corresponding images with higher noise level. It is not necessary herein that the pair $x_k, y_k$ represents the exact same anatomy for the same patient. Some imaging protocols may mandate different dosages and a PACS may be searched to find imagery for each such protocols to combine into a training pair.

In the training phase, an architecture of a machine learning model NN, such as the shown CNN network in Figure 2 is pre-populated with initial set of weights. The weights $\theta$ of the model NN represent a parameterization $M^\theta$, and it is the object of the training system TS to optimize and hence adapt the parameters $\theta$ based on the training data $(x_k, y_k)$ pairs. In other words, the learning can be formulized mathematically as an optimization scheme where a cost function F is minimized although the dual formulation of maximizing a utility function may be used instead.

Assuming for now the paradigm of a cost function $F$, this measures the aggregated residue(s), that is, the error incurred between data estimated by the neural network model NN and the targets as per some or all of the training data pairs $k$:

$$argmin_\theta F = \sum_k || M^\theta(x_k) - y_k || \qquad (1)$$

In eq (1) and below, function $M()$ denotes the result of the model NN applied to input x. The cost function may be pixel/voxel-based, such as the L1 or L2 cost function. In training, the training input data $x_k$ of a training pair is propagated through the initialized network M. Specifically, the training input $x_k$ for a k-th pair is received at an input IL, passed through the model and is then output at output OL as output training data $M^\theta(x)$. A suitable measure $\|\cdot\|$ is used such as a $p$-norm, squared differences, or other, to measure the difference, also referred to herein as residue, between the actual training output $M^\theta(x_k)$ produced by the model NN, and the desired target $y_k$.

The output training data $M(x_k)$ is an estimate for target $y_k$ associated with the applied input training image data $x_k$. In general, there is an error between this output $M(x_k)$ and the associated target $y_k$ of the presently considered k-th pair. An optimization scheme such as backward/forward propagation or other gradient based methods may then be used to adapt the parameters $\theta$ of the model NN so as to decrease the residue for the considered pair $(x_k, y_k)$ or a subset of training pairs from the full training data set.

After one or more iterations in a first, inner, loop in which the parameters $\theta$ of the model are updated by updater UP for the current pair $(x_k, y_k)$, the training system TS enters a second, an outer, loop where a next training data pair $x^{k+1}, y^{k+1}$ is processed accordingly. The structure of updater UP depends on the optimization scheme used. For example, the inner loop as administered by updater UP may be implemented by one or more forward and backward passes in a forward/backpropagation algorithm. While adapting the parameters, the aggregated, for example summed, residues of all the training pairs are considered up to the current pair, to improve the objective function. The aggregated residue can be formed by configuring the objective function $F$ as a sum of squared residues such as in eq. (1) of some or all considered residues for each pair. Other algebraic combinations instead of sums of squares are also envisaged.

Optionally, the training system includes a sampler SMP to sample the original training input volume into sub-volumes and the model is then trained based on such sub-volumes, instead of processing the training input volume at once as a whole. This allows achieving better learning due to enforcing an anatomy agnostic learning paradigm.

Optionally, one or more 3D batch normalization operators ("BN", not shown) may be used. The batch normalization operators may be integrated into the model NN, for example coupled to one or more of the convolutional operator CV in a layer. BN operators allow mitigating vanishing gradient effects, the gradual reduction of gradient magnitude in the repeated forward and backward passes experienced during gradient-based learning algorithms in the learning phase of the model NN. The 3D batch normalization operators BN may be used in training, but may also be used in deployment. As opposed to 2D batch normalization operators, the 3D batch normalization operators receive (mini-)batches of 3D data as input.

The generalized training system as shown in Figure 4 can be considered for all learning schemes, in particular supervised schemes. Unsupervised learning schemes may also be envisaged herein in alternative embodiments. GPUs may be used to implement the training system TS.

Reference is now made to Figure 5 which shows a flow chart of a method for de-noising 3D imagery. The method is computer implemented.

At step S520, a 3D input image to be de-noised is received. The said 3D image is derived from reconstruction of projection data acquired by an x-ray imaging modality such as a CT scanner or other type of rotational X-ray imaging equipment. However, other (non-X-ray) imaging modalities, such as MRI or emission imaging, such as position emission tomography PET or SPECT, are also envisaged.

At step S540 a pre-trained convolution neural network model is used to process the input 3D image. The neural network comprises a consequence of cascaded 3D convolutional operators. The 3D input image is processed by one or more convolutional operators in a first layer to produce a feature map (or several feature maps as output of the first layer) and the feature map is then processed in sequence into feature maps of higher generation by further convolutional operators of the subsequent layers.

At step S550, at an output layer of the network, a new version V' of the 3D input image V is obtained. This new version V' has in general a lower noise level than the 3D input image V received at step S520. A receptive field of the neural network is smaller than the size (in the input image) of the image structure of interest.

At step S560 the de-noised image V' is provided for displaying on a display device, for storage in a memory or for other processing.

Optionally, there may be a step S530 where a user input is received that specifies the size of the receptive field. In response to this request, a pre-trained neural network is identified that has a receptive field of the prescribed size and at step S520 the so selected neural network is used to process the 3D imagery.

Optionally, there is a pre-processing step S510 where the original input imagery is sampled into a sub-volume which is then processed as described above. Preferably, the original input volume is sub-divided into a plurality of such sub-volumes that cover the entire block or a region of particular interest. In case the said sub-sampling is used, the receptive field of the neural network is adapted accordingly so as to be smaller than the image structure of interest.

Preferably, in general, whether or not the input imagery is sub-sampled the receptive field of the neural network is chosen to be smaller than image structure of interest represented in the image volume. The said size may be measured in projection view along the depth dimension.

Referring now to Figure 6, this shows a flow chart of a method for training a machine learning model NN based on training data. The training data may be generated by simulation or may be gathered as historical imagery from databases such as a PACS (A picture archiving and communication system) in a HIS (hospital information system).

At step S610 training data is received in the form of pairs $(x_k, y_k)$. Each pair includes a training input $x_k$ and an associated target $y_k$. $x_k$ is a 3D image volume with higher noise level than a similar 3D image $y_k$. In particular, pairs of high and low dose CT image volumes may be used.

At step S620, the training input $x_k$ is applied to an initialized machine learning model NN to produce a training output.

A deviation, or residue, of the training output $M(x_k)$ from the associated target $y_k$ is quantified by a cost function $F$. One or more parameters of the model are adapted at step S630 in one or more iterations in an inner loop to improve the cost function. For instance, the model parameters are adapted to decrease residues as measured by the cost function. The parameters include in particular weights W of the convolutional operators CV.

The training method then returns in an outer loop to step S610 where the next pair of training data is fed in. In step S620, the parameters of the model are adapted so that the aggregated residues of all pairs considered are decreased, in particular minimized. The cost function quantifies the aggregated residues. Forward- backward propagation or similar gradient-based techniques may be used in the inner loop.

More generally, the parameters of the model NN are adjusted to improve objective function F which is either a cost function or a utility function. In embodiments, the cost function is configured to the measure the aggregated residues. In embodiments the aggregation of residues is implemented by summation over all or some residues for all pairs considered. The method may be implemented on one or more general-purpose processing units TS, preferably having processors capable for parallel processing to speed up the training.

The training method may include a pre-processing step S615 to sample the input volume V at step S610 into one or more sub-volumes. Step S620 then proceeds based on such a sub-volume as described above, instead of on the whole volume. The method is repeated for plural such sub-volumes until an intended part, for example the whole volume, has been covered. The sampling may be random or deterministic.

The above described methods and systems are not confined to purely spatially 3D volumes V. In alternative embodiments, the input imagery may include a temporal dimension t. In particular, time series of 2D images It or time series of 3D images $V_t$ for different times t also envisaged in embodiments. The 2D images It may include a specific slice reconstructed from different sets $\lambda_t$ of projection images acquired at different times. Alternatively, the 2D images It are radiographic exposures acquired at different times. The times series $I_t$ or Vt may be grouped as 3D or 4D input data, respectively. The above described convolutional 3D processing by the network NN may then be applied to the 2D times series $I_t = V = (x, y, t)$ grouped as 3D data V, with x,y spatial coordinates. For the 4D data Vt, the convolutional 3D processing by the network NN may be applied to any combination of two spatial directions in combination with the temporal axis, $V = (c_1, c_2, t$ with $c_j$ spatial coordinates from different spatial directions $c_1 \neq c_2$, and $c_j \in \{x, y, z\}$. The order

of the $c_j$ is immaterial.

The limited receptive field RF size s2 of the convolutional neural network may be set through adjusted filter kernel sizes of the convolutional operations CV and/or depth for any combination of the above described input image data with temporal dimension, thus allowing individually adjusted receptive field sizes for each combination of spatial and temporal direction of the given 3D or 4D imagery. Because spatial proximity causes correlation, the above described motivation for using 3D convolutions hence applies equally along the spatial dimension.

The components of the image processing system IPS (including in particular denoiser DN) may be implemented as one or more software modules, run on one or more general-purpose processing units PU such as a workstation associated with the imager XI, or on a server computer associated with a group of imagers.

Alternatively, some or all components of the image processing system IPS may be arranged in hardware such as a suitably programmed microcontroller or microprocessor, such an FPGA (field-programmable-gate-array) or as a hardwired IC chip, an application specific integrated circuitry (ASIC), integrated into the imaging system XI. In a further embodiment still, the image processing system IPS may be implemented in both, partly in software and partly in hardware.

The different components of the image processing system IPS may be implemented on a single data processing unit PU. Alternatively, some or more components are implemented on different processing units PU, possibly remotely arranged in a distributed architecture and connectable in a suitable communication network such as in a cloud setting or client-server setup, as a web-hosted service etc. This allows serving multiple geographically distributed imaging sites, either across a single medical facility or across multiple medical facilities.

One or more features described herein can be configured or implemented as or with circuitry encoded within a computer-readable medium, and/or combinations thereof. Circuitry may include discrete and/or integrated circuitry, a system-on-a-chip (SOC), and combinations thereof, a machine, a computer system, a processor and memory, a computer program.

In another exemplary embodiment of the present invention, a computer program or a computer program element is provided that is characterized by being adapted to execute the method steps of the method according to one of the preceding embodiments, on an appropriate system.

The computer program element might therefore be stored on a computer unit, which might also be part of an embodiment of the present invention. This computing unit may be adapted to perform or induce a performing of the steps of the method described above. Moreover, it may be adapted to operate the components of the above-described apparatus. The computing unit can be adapted to operate automatically and/or to execute the orders of a user. A computer program may be loaded into a working memory of a data processor. The data processor may thus be equipped to carry out the method of the invention.

This exemplary embodiment of the invention covers both, a computer program that right from the beginning uses the invention and a computer program that by means of an up-date turns an existing program into a program that uses the invention.

Further on, the computer program element might be able to provide all necessary steps to fulfill the procedure of an exemplary embodiment of the method as described above.

According to a further exemplary embodiment of the present invention, a computer readable medium, such as a CD-ROM, is presented wherein the computer readable medium has a computer program element stored on it which computer program element is described by the preceding section.

A computer program may be stored and/or distributed on a suitable medium (in particular, but not necessarily, a non-transitory medium), such as an optical storage medium or a solid-state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope.

**Claims**

1. A system (IPS) for de-noising 3D imagery, comprising:
   a pre-trained discriminative neural network (NN) including a sequence of 3D convolutional operators for processing a received 3D image volume into a 3D output image having a lower noise level than the 3D input image.

2. A system of claim 1, wherein the 3D input image is of an object of interest represented in the 3D input image as a structure (IS) having a first size (s1), wherein a kernel size of at least one of the 3D convolutional operators (CV) and/or a depth of the neural network is configured so that the receptive field (RF) of the neural network is of a second size (s2), smaller than the first size (s1).

3. System of any one of claims 1 or 2, including a sampler (SMP) configured to sample from an original 3D image one or more 3D sub-sets, wherein the said 3D input image is such as sub-set.

4. System of any one of the preceding claims, further including a user interface (UI) for selecting a different neural network having a different second size.

5. System of any one of the previous claims, including a plurality of such discriminative neural networks ($NN_1$-$NN_3$) in a serial arrangement for serial processing of the input image.

6. System of any one of the previous claims 1-4, including a plurality of such discriminative neural networks ($NN_1$-$NN_3$) in a parallel arrangement for processing copies of the input image to output plural such output images, further comprising an aggregation layer (AL) to aggregate the plural output images into a single output image.

7. The system of any one of the previous claims, wherein the 3D input images represents i) three spatial dimensions or ii two spatial dimensions and one temporal dimension.

8. The system of any one of the previous claims, wherein the receptive field (RF) of pre-trained discriminative neural network (NN) is set through adjusted filter kernel sizes of the convolutional operators (CV) for any combination of spatial and/or temporal dimensions of the 3D input image.

9. The system of any one of the previous claims, arranged at least in parts as a web-hosted service.

10. Training system (TS) for training a neural network model as per any one of the preceding claims.

11. Method for de-noising 3D imagery, comprising:

    receiving (S520) a 3D input image;
    with a pre-trained convolutional discriminative neural network (NN) including a sequence of 3D convolutional operators, processing (S540) the received 3D image volume into a 3D output image; and
    outputting (S560) the 3D output image having a lower noise level than the 3D input image.

12. Training method for training a neural network model (NN) as per any one of the preceding claims 1-9.

13. Training method of claim 12, wherein the said training is based on training data, the training data including training input data, the training input data comprising at least one 3D image volume, the method further comprising sub-sampling the 3D image volume to obtain at least one sub-volume and wherein a neural network model is trained based on the said at least one sub-volume.

14. A computer program element, which, when being executed by at least one processing unit (PU), is adapted to cause the processing unit (PU) to perform the method as per any one of claims 11-13.

15. A computer readable medium having stored thereon the program element of claim 14.

**FIG. 1**

**FIG. 2A**

**FIG. 2B**

**FIG. 2C**

V, FM$^i$

RA

CV

FM, FM$^{i+1}$

mij

RF

RF

X

Y

Z

**FIG. 3A**

RF

V,FM$^i$

Z

s2

s1

IS

s2

RF

X

Y

RF

**FIG. 3B**

TS

NN

$(x,y) \longmapsto$ $x \longmapsto$ $\mid M(x) - y \mid = F$

IN

OUT

UP

# FIG. 4

V

S510

S520

S530

S540

S550

S560

V'

# FIG. 5

S610

S620

S630

# FIG. 6

Europäisches
Patentamt

European
Patent Office

Office européen
des brevets

# EUROPEAN SEARCH REPORT

Application Number

EP 20 18 4658

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RAN MAOSONG ET AL: "Denoising of 3D magnetic resonance images using a residual encoder-decoder Wasserstein generative adversarial network", MEDICAL IMAGE ANALYSIS, vol. 55, July 2019 (2019-07), pages 165-180, XP085696878, ISSN: 1361-8415, DOI: 10.1016/J.MEDIA.2019.05.001 | 1-4,7, 9-15 | INV. G06T5/00 |
| A | * page 165 - page 169 * | 5,6,8 | |
| A | US 2020/065940 A1 (TANG JIE [US] ET AL) 27 February 2020 (2020-02-27) * paragraph [0004] - paragraph [0007] * | 1-15 | |
| A | US 2019/104940 A1 (ZHOU JIAN [US] ET AL) 11 April 2019 (2019-04-11) * paragraph [0021] - paragraph [0025] * | 1-15 | |

| TECHNICAL FIELDS SEARCHED (IPC) |
|---|
| G06T |

The present search report has been drawn up for all claims

| Place of search | Date of completion of the search | Examiner |
|---|---|---|
| Munich | 15 December 2020 | Maier, Werner |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 18 4658

This annex lists the patent family members relating to the patent documents cited in the above-mentioned European search report.
The members are as contained in the European Patent Office EDP file on
The European Patent Office is in no way liable for these particulars which are merely given for the purpose of information.

15-12-2020

| Patent document cited in search report | | Publication date | Patent family member(s) | | Publication date |
|---|---|---|---|---|---|
| US 2020065940 | A1 | 27-02-2020 | CN 110858391 A | | 03-03-2020 |
| | | | EP 3633601 A1 | | 08-04-2020 |
| | | | JP 2020064609 A | | 23-04-2020 |
| | | | KR 20200026071 A | | 10-03-2020 |
| | | | US 2020065940 A1 | | 27-02-2020 |
| US 2019104940 | A1 | 11-04-2019 | NONE | | |

For more details about this annex : see Official Journal of the European Patent Office, No. 12/82

EPO FORM P0459

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **T. M. MITCHELL.** Machine Learning. McGraw-Hill, 1997

- U-Net: Convolutional Networks for Biomedical Image Segmentation. **OLAFRONNEBERGER et al.** Medical Image Computing and Computer-Assisted Intervention - MICCAI 2015'', Lecture Notes in Computer Science. vol. 9351, 234